Europäisches Patentamt

(19) European Patent Office

Office européen des brevets

(11) Publication number: **0 107 343**
**B1**

# (12) EUROPEAN PATENT SPECIFICATION

(45) Date of publication of patent specification: **06.05.87**

(21) Application number: **83305603.9**

(22) Date of filing: **21.09.83**

(51) Int. Cl.⁴: **B 23 K 9/04,** B 23 K 9/30

(54) Method of discharge coating and an apparatus therefor.

(30) Priority: **21.09.82 JP 163246/82**
**21.09.82 JP 163247/82**

(43) Date of publication of application:
**02.05.84 Bulletin 84/18**

(45) Publication of the grant of the patent:
**06.05.87 Bulletin 87/19**

(84) Designated Contracting States:
**DE FR GB IT**

(56) References cited:
**WO-A-80/01772**
**DE-A-1 615 202**
**GB-A-1 133 093**
**US-A-4 346 281**

(73) Proprietor: **INOUE-JAPAX RESEARCH
INCORPORATED
5289 Aza Michimasa Nagatsudacho Midoriku
Yokohamashi Kanagawaken 227 (JP)**

(72) Inventor: **Inoue, Kiyoshi
16-8 Kamiyoga 3-chome
Setagayaku Tokyo (JP)**

(74) Representative: **Powell, Stephen David et al
J.F. Williams & Co. 34 Tavistock Street
London WC2E 7PB (GB)**

Courier Press, Leamington Spa, England.

## Description

This invention relates to a method of and an apparatus for discharge coating and, more particularly, to an improved method of and an apparatus for discharge coating by which a smooth, thick, rigid, and flawless coating layer can be obtained in a short time.

In a conventionally well known discharge coating apparatus, a suitable voltage pulse is applied between a coating material electrode and a workpiece, and a vibration such as to break the surface of the workpiece at its point is also applied to this electrode synchronously with that pulse. Thus, an electric discharge occurs between the electrode and the workpiece surface, and a portion of the coating material electrode is fused due to the heat produced at this time and is melt-adhered on the workpiece surface, thereby forming a coating layer.

Discharge coating apparatuses are generally constituted as a handy-type tool. The point of the coating material electrode of such apparatus is relatively moved along the workpiece surface, thereby coating a desired portion on the workpiece surface.

As a coating material electrode, various metals and alloy materials that are selected in accordance with the purpose of coating, as well as a wear resistant sintered hard alloy, corrosion resisting alloy, fire resisting alloy, etc., which are generally formed into a wire- or rod-shaped, are used. This discharge coating apparatus is provided with a chuck which can co-axially hold these electrodes.

In addition, as an apparatus for allowing the coating material electrode to vibrate, a vibrating apparatus comprising an electromagnet which is vibrated by a commercial AC power or a high frequency pulse power supply, springs, etc., or a vibrating apparatus comprising an eccentric cam having an eccentric rotary shaft and a motor to rotate it, and the like are used. The discharge coating apparatus is conventionally constituted in such a manner that these apparatuses allow the chuck to which the above-mentioned wire- or rod-shaped coating material electrode was attached to vibrate, and that the point of that electrode is come into contact with the surface of the workpiece and is opened therefrom due to the above-mentioned vibrational motion.

On the other hand, a desired voltage pulse is applied between both synchronously with the timing when the coating material electrode comes close to or into contact with the workpiece surface.

The voltage pulse may have the same frequency as the vibrating frequency of the coating material electrode, but it may be a voltage pulse train having a higher repeating frequency than that which is intermittent in synchronism with the above vibration. In this case, a plurality of pulse discharges are performed during a certain period of time including one contact period.

Each discharge pulse heats the contact or approaching portion of the workpiece and coating material electrode, causing a portion of the coating material electrode having particularly a small heat capacity to be melted, so that when the coating material electrode is removed from the surface of the workpiece, the melt-adhered coating materials each having a diameter of about 10—30 μm formed in the trace of the contact melting point.

In this way the coating material is fused and adheres to the workpiece surface due to the action of the gravity and adhesion, then the coating material electrode is removed and the fused metal is resolidified, thereby forming the coating material melt-adhered portion.

However, the surface of its melt-adhered portion becomes notched because when the coating material electrode is removed from its surface, the fused metal is pulled and stretched as if a thread were pulled due to the surface tension.

It will be able to carry out desired coatings on the entire or necessary portion of the surface of the workpiece if the relative machining feed motion is given to the workpiece surface and/or coating material electrode in the perpendicular direction to the direction of the said vibration, and the discharge point is moved on the workpiece surface so as to cover the whole desired portions.

However, in a conventionally known discharge coating apparatus, the coating material electrode is simply and confrontingly disposed on the workpiece surface and this is vibrated perpendicularly against the surface to be coated. Therefore, there are many problems such that: when the coating material electrode is removed from the surface, the fused coating material is pulled and stretched perpendicularly against the surface as if a thread were pulled and then is finally cut, so that a large projection is caused on the coating surface; on the other hand once such a projecting portion is formed, the contact and melt-adhering of the coating material electrode hardly occurs around its projection; as a result of this, the coating·material is not uniformly adhered, causing the surface of the coating layer to become notched; moreover, a number of fairly large pin holes and flaw portions are caused; in addition, since the maximum limit amount that can be coated is small, a thicker coating layer cannot be obtained and the density of the coating layer is insufficient.

In the specification of the US Patent No. 4,346,281, which has already been disclosed by the present inventors, a technology is set forth wherein a plurality of wire-shaped electrodes are annularly held so as to be mutually parallel by one shank and the point portions of the above wire-shaped electrodes are come into substantially parallel contact with the workpiece surface, and a voltage pulse is supplied between the electrodes and the workpiece while rotating the electrodes around the central shaft of the above shank, thereby forming a coating layer on the workpiece surface.

With this apparatus, the points of the coating material electrodes are rotated along circular locus which

2

is substantially perpendicular against the workpiece surface, thereby to form a coating layer. However, although this method can provide efficient formation of the coating layer, enough stable mechanical contact is not realized between the coating material electrodes and the workpiece surface, so that there is such a problem that a coating layer with sufficiently good quality is not obtained.

Also, in the specification of the US Patent No. 3,741,426, which has already been disclosed by the present inventors, another technology is set forth wherein a rotating electrode is used, and a voltage pulse train is supplied between the electrode and the workpiece while rotating the electrode around the central shaft thereof, which is kept parallel to the surface of the workpiece, thereby forming a coating layer on the workpiece surface.

And also, in the specification of the Japanese Patent No. 931,227, another technology is set forth wherein a rotating electrode which is held perpendicular to and the surface of the workpiece is used, and a voltage pulse train is supplied between the electrode and the workpiece while rotating the electrodes around the central shaft thereof, thereby forming a coating layer on the workpiece surface.

However, in spite of these improvements, the problem that a coating layer with sufficiently good quality is not obtained never been solved.

The present invention seeks to overcome or reduce one or more of the above problems.

The above mentioned U.S. Patent No. 4,346,281 discloses a method and apparatus in which a layer is coated on a member by providing a coating material electrode adjacent the surface of the member and producing relative movement between the electrode and the member. This document corresponds to the introductory part of claims 1, 7 and 10.

According to a first aspect of the present invention there is provided a method of coating a layer on a member comprising providing a coating material electrode adjacent the surface of the member and producing relative movement between the electrode and the member while passing a current through the electrode and the member, thereby forming a coating layer on the surface of the member, characterised in that the relative movement comprises a vibration of the electrode in the direction of a longitudinal central axis thereof and towards and away from the member, and an additional motion which is a rotational motion around the longitudinal central axis or an axis parallel thereto.

According to a second aspect of the present invention there is provided a method of coating a layer on a member comprising providing a coating material electrode adjacent the surface of the member and producing relative movement between the electrode and the member while passing a current through the electrode and the member, thereby forming a coating layer on the surface of the member, characterised in that the relative movement comprises a vibration of the electrode in the direction of a longitudinal central axis thereof and towards and away from the member, and an additional motion which is a vibration which is perpendicular to said axis.

According to a third aspect of the present invention there is provided a discharge coating apparatus for coating a layer on a member comprising a coating material electrode arranged to be positioned adjacent the surface of the member, means for producing relative movement between the electrode and the member, and means for simultaneously passing a current through the electrode and the member, characterised in that the movement producing means comprises means for producing vibration of the electrode in the direction of a longitudinal central axis thereof and means for producing additional motion having at least a major component lying in a plane perpendicular to said axis.

An advantage of the above methods and apparatus is that a thick, uniform and dense coating layer with a smooth surface can be formed on the whole desired area.

Basically this is accomplished by vibrating the coating material electrode in its longitudinal direction and further applying another additional motion to the electrode for allowing the electrode to move in a resultant direction which is not perpendicular to but has a slant angle relative to the workpiece surface, thereby slowly coming into contact with and moving away from the workpiece surface.

In a preferred embodiment, the motion path which slants from the workpiece surface is given by holding the shaft of the coating material electrode perpendicularly to the workpiece surface and vibrating the electrode in its longitudinal direction in a conventionally known manner, and then adding the rotational motion around the above-mentioned shaft.

The point of the coating material electrode is removed from the workpiece surface at the synthesized speed of the axial departure velocity due to its axial vibration and the tangential velocity due to its rotational motion; therefore, the fused portion is adhered as if it were coated on the surface of the coating layer, so that burrs or projection which are perpendicular to the coating layer surface are not formed.

Since the tangential velocity component at the peripheral edge portion of the coating material electrode is large, the departure direction of the coating material electrode is advantageously near parallel against the workpiece surface; however since the tangential velocity component near the rotary central shaft is small, the departure direction is adversely near perpendicular to the workpiece surface, so that adequate effect of the present invention is not obtained. To prevent such an evil influence, it is preferable to use, as a coating material electrode, an electrode in which a long central hole is formed, an electrode which was shaped like a cup, a plurality of thin wire-shaped electrodes which were arranged such that their cross sections are annularly and continuously chained on one plane, or the like.

Furthermore, in the present invention, the above-described works are performed not only in the air but

3

also in a vacuum and an inert gas such as argon, or a reducing gas such as hydrogen, or mixture gases of these.

The present invention will be described in detail hereinbelow with reference to the accompanying drawings.

Figs. 1 and 2 are explanatory views showing the relative motion of the electrode and workpiece surface and the state in which a coating layer is formed by a conventionally known discharge coating method;

Fig. 3 is an explanatory view showing the relative motion of the electrode and workpiece surface and the state in which a coating layer is formed by a method and an apparatus according to the present invention;

Fig. 4 is a front view showing the overall construction of the discharge coating apparatus according to the present invention;

Fig. 5 is an enlarged cross sectional view showing the main part of the apparatus shown in Fig. 4;

Fig. 6 is an enlarged cross sectional view showing a preferred construction of a holding apparatus of a coating material electrode;

Fig. 7 is a side elevational view showing one preferred shape of the coating material electrode;

Fig. 8 is a transversal cross sectional view of the coating material electrode shown in Fig. 7;

Fig. 9 is a transversal cross sectional view showing another preferred shape of the coating material electrode;

Fig. 10 is a longitudinal transversal cross sectional view of the coating material electrode shown in Fig. 9;

Fig. 11 is a longitudinal cross sectional view showing still another preferred shape of the coating material electrode;

Figs. 12 to 18 are diagrams showing the waveforms of the main pulses which are used for the apparatus of the present invention;

Fig. 19 is a circuit diagram showing a circuit for generating the above various kinds of pulses; and

Fig. 20 is a partial circuit diagram showing a modification of the output section of the circuit shown in Fig. 19.

Fig. 21 is a side elevational view with a part cut away showing the change of the point shape of an electrode and the cross sectional shape of a coating layer when a solid columnar electrode was used;

Fig. 22 is a top plan view of the coating layer shown in Fig. 21;

Fig. 23 is a side elevational view with a part cut away showing the change of the point shape of an electrode and the cross sectional shape of a coating layer when an electrode having a central hole was used;

Fig. 24 is a top plan view of the coating layer shown in Fig. 23; and

Fig. 25 is a side elevational view with a part cut away illustrating another embodiment of the discharge coating apparatus according to the present invention.

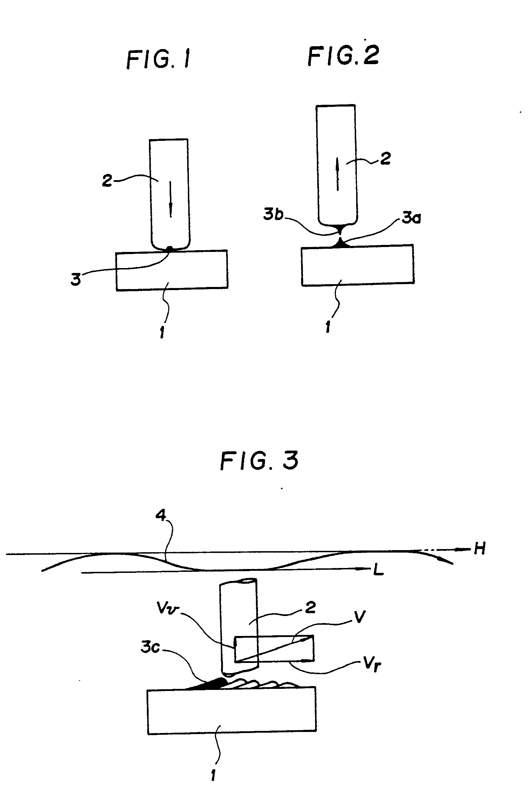

In Figs. 1 to 3, a reference numeral 1 denotes a workpiece; 2 is a simple rod-like coating material electrode; and 3 is a metal fused due to the electric discharge caused between the coating material electrode 2 and the workpiece 1 when the point of the electrode 2 comes into contact with the surface of the workpiece 1. However, the fused metal 3 is illustrated as an extremely magnified part.

As will be illustrated in detail later, a vibrational motion is applied to the coating material electrode 2 in its axial direction such that its point is come into contact with or removed from the surface of the workpiece 1. At the same time, a direct current or high frequency pulse train is supplied between both synchronously with its vibration, during a certain period including the term that the point of the coating material electrode 2 is in contact with the workpiece surface. Hence, the metal is fused or softened at the contact point between both.

Generally, the coating material electrode 2 has a smaller heat capacity than that of the workpiece 1 and becomes higher temperature, so that the fused amount of the electrode is larger than that of the workpiece. Therefore, with the aid of gravity as well as its amount, the fused substance of the coating material is adhered on the surface of the workpiece 1, thereby to form a coating layer.

Although this fused metal is, at first, an alloy of the alloy constituting the workpiece 1 and the coating material, it will finally become the fused substance consisting substantially only the coating material because the component of the coating material gradually increases.

In a prior-art known apparatus, even if the scanning feed is done on a plane which is perpendicular to the vibrationing direction between the workpiece 1 and the coating material electrode 2, the feed speed is so slow that the relative motion between both will be the vibrating motion which is almost perpendicular to the workpiece surface.

Consequently, this fused metal 3 is pulled and stretched like a thread as if a viscous liquid were scoped up and is rapidly cooled and is finally cut, so that as shown in Fig. 2, conically pointed or crater like shaped resolidified portions 3a and 3b are formed in the traces of the above-mentioned contact points.

It will be soon understood that the shape of this resolidified portion 3a is not ideal as a shape of a coating layer.

This resolidified portion 3a itself is an disadvantage projecting portion; moreover, when the coating material electrode 2 again drops, the resolidified portion 3a will collide with the resolidified portion 3b, so that there is a large possibility of growth since it will be again fused. If such a situation occurs, the contiguity or contact, and discharge between the workpiece 1 and the coating material electrode 2 and fusion of them will be difficult at its peripheral portion; as a result of this, the surface of the coating layer cannot be smooth, and further defects such as cavity or the like occur in the coating layer.

In addition, the resolidified portion 3b produced at the point of the coating material electrode 2 may strike and break and damage the coating layer produced on the workpiece 1 when it hits the surface of the workpiece 1.

In the present invention, as shown in Fig. 3, in addition to the vibration perpendicular to the surface to be coated, an additional motion which is parallel to that surface is applied to the coating material electrode 2; therefore, the coating material electrode 2 relatively moves along a wave-like curve 4 similar to a sine curve which reciprocates between two levels shown in the drawing, i.e. a higher level H and a lower level L.

Fig. 3 shows the state in which the coating material electrode 2 is removed from the coating layer, namely the situation when it parts from the lowest level. At this time, since the coating material electrode 2 has both detaching velocity Vv in the direction perpendicular to the coating surface and sliding velocity Vγ in the direction parallel to that surface, the fused metal is coated on the surface of the workpiece 1. Therefore, resolidified portions 3c thus formed are; piled up like a scale, thereby forming a dense and rigid coating layer.

From Fig. 3, the situation can be easily assumed wherein the coating material electrode 2 drops and touches down the coating layer.

During the landing operation at this time, the projecting portion such as the resolidified portions 3a and 3b shown in Fig. 2 already described previously, even if they are possibly present, will be immediately fused and coated near them, so that they will disappear.

In a desired embodiment, during the period of time when the coating material electrode 2 is in a lower level and is in contact with the surface of the workpiece 1, both are rubbed over a fairly long distance and a direct current or high frequency voltage pulse train is applied thereto all during that period.

In a further preferred embodiment, the coating material electrode 2 is supported by means of an elastic member which can grip it in the direction of the above-mentioned additional motion; thus, the skipping motion of the coating material electrode 2 is forcibly done on the surface of the workpiece 1, i.e. the repetitive motion consisting of the sudden stop and sliding motion is compelled. A sufficient amount of metal is fused during the period when the electrode stops, on the other hand the rapid sliding motion acts to distribute the fused metal over a wide range on the workpiece surface.

In particular, when the coating material electrode 2 removes from the lowest level L, the electrode 2 is released from the frictional force between the electrode 2 and the surface of the workpiece 1, so that a large sliding velocity is suddenly applied due to the energy accumulated in the above-mentioned elastic member, thereby finishing the surface further smoothly.

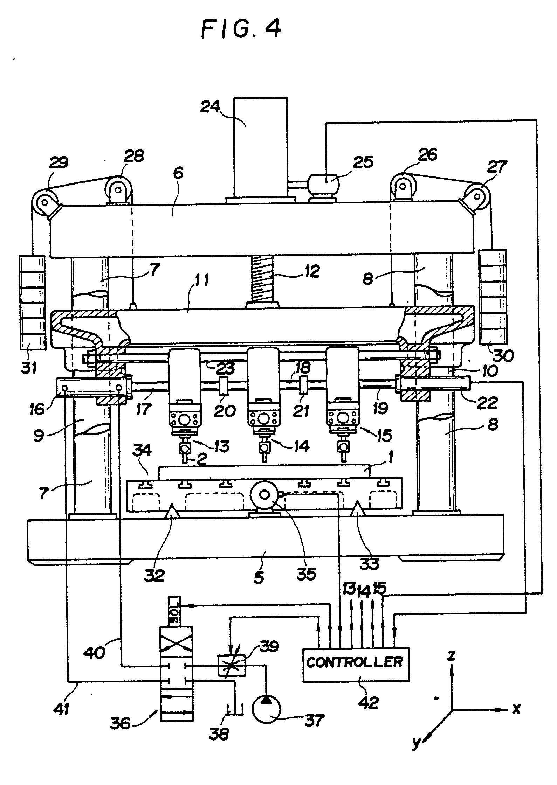

The discharge coating apparatus schematically illustrated in Fig. 4 will now be described hereinbelow.

In the drawing, a reference numeral 5 indicates a base; 6 is a top beam; 7, 8, 9, and 10 columns, 11 a cross beam which is elevationally supported by the columns 7, 8, 9, and 10; 12 an elevating screw for the cross beam 11; 13, 14 and 15 travelling heads; 16 a hydraulic feeding cylinder; 17, 18 and 19 feed rods; 20 and 21 shaft joints; 22 and encoder; 23 a guide rod; 24 a cross beam elevating mechanism; 25 a motor; 26, 27, 28, and 29 pulleys; 30 and 31 counterbalances; 32 and 33 guideways; 34 a table which is slidably mounted on the guideways 32 and 33 and on which the workpiece 1 is mounted and fixed; 35 a feed motor to move the table 34; 36 a 4-way hydraulic feed control valve; 37 an oil pump; 38 an oil tank; 39 a flow control valve; 40 and 41 hydraulic pipings; and 42 a controller.

The four columns 7, 8, 9, and 10 mounted on the base 5 support on their top portions the top beam 6, and slideably support and guide the cross beam 11 at their intermediate portions.

The cross beam 11 is elevated along the columns 7, 8, 9, and 10, i.e. in the direction of z axis, namely in other words, vertically in Fig. 4, by the cross beam elevating screw 12 to be elevated by the cross beam elevating mechanism 24 provided on the top beam 6. At that time, the load of the cross beam elevating mechanism 24 due to the weight of the cross beam 11 is reduced by the counterbalances 30 and 31.

The travelling heads 13, 14 and 15 are slidably supported along the guide rod 23, i.e. in the direction of x axis, further in other words, horizontally in Fig. 4, and are reciprocally moved in the above-mentioned directions by the feed rods 17, 18 and 19 which are driven by the hydraulic cylinder 16.

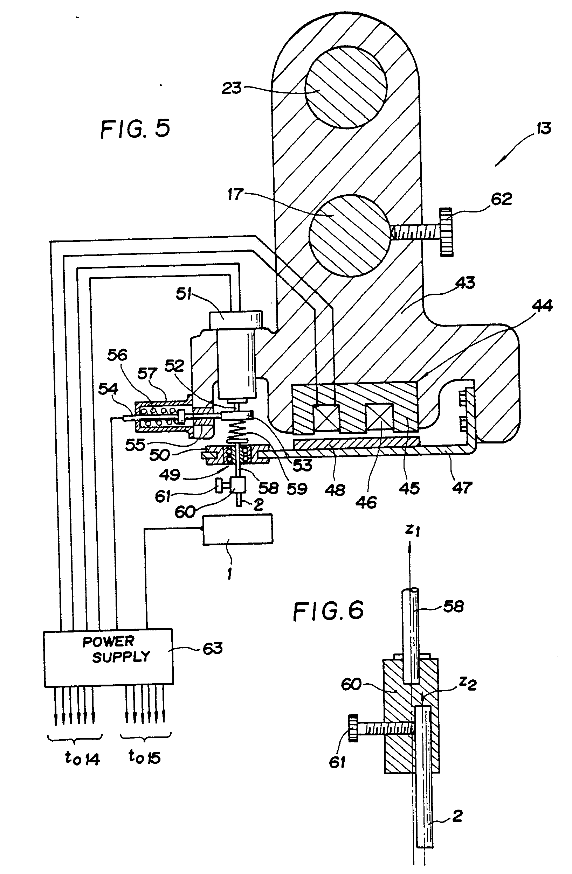

The travelling heads 13, 14 and 15 will be described in detail later with reference to Fig. 5.

The table 34 is slidably mounted on the pair of guideways 32 and 33 each having a triangular cross section which are attached in parallel on the base 5, and is reciprocally and horizontally moved, i.e. in the direction of y axis shown in the drawing through a feed screw (not shown) by the motor 35.

The workpiece 1 is attached on the table 34 in a well-known manner, for example, by T bolts and the like (not shown).

When the coating material electrodes 2 attached to the bottom portions of the travelling heads 13, 14 and 15 are vertically vibrated through the cross beam elevating mechanism 24 by the motor 25 to be controlled by the controller 42, the cross beam 11 can hit intermittently the upper surface of the workpiece 1 by its lower end.

The cross beam 11 is positioned to a suitable height such that a desired electric discharge occurs to form a better coating layer. In such a state, the hydraulic cylinder 16 allows the feed rods 17, 18 and 19 to be

5

# 0 107 343

put in and out at a proper speed, thereby causing the point of the coating material electrode 2 to cross and move on the surface of the workpiece 1.

The travelling speeds and locations of the travelling heads 13, 14 and 15 and detected by the encoder 22, and the detection signals are supplied to the opening angle of the flow control valve 39 to hold the travelling speeds of the travelling heads 13, 14 and 15 to desired values, and also controls the solenoid of the 4-way hydraulic feed control valve 36 to reciprocally move these travelling heads so as to cover desired regions. At the same time, on the other hand, the controller 42 feeds the workpiece 1 in the direction perpendicular to the moving direction of the above travelling heads through the table 34.

Due to this, the desired regions on the surface of the workpiece 1, the entire or a part of the surface thereof are completely scanned by the bottom portion of the coating material electrode 2. At the same time, as will be described later with respect to Fig. 5, the discharge is performed between the coating material electrode 2 and workpiece 1, thereby forming coating layer having a desired thickness which covers the above-mentioned desired region.

For this purpose, it is preferable to use a numerical controller as the controller 42.

Next, Fig. 5 will be described.

The constructions of the other travelling heads 14 and 15 are identical to that shown in Fig. 5, and only the construction of the travelling head 13 is illustrated and described herein.

In the drawing, a reference numeral 43 represents a carriage; 44 is an electromagnet consisting of an iron core 45 and a coil 46; 47 an L-shaped curved leaf spring; 48 an attracted member made of high permeability material such as a soft iron or the like; 49 a ball bearing; 50 a holding member; 51 a motor; 52 an output shaft of the motor 51; 53 a current collecting disk; 54 a current supplying rod; 55 an insulating bushing; 56 a coil spring for the current supplying rod 54; 57 a housing for current supplying rod; 58 a rotary shaft; 59 a coil spring to form a skipping apparatus; 60 a chuck, provided at the point of the rotary shaft 58, for sandwiching the coating material electrode 2; 61 a set screw to fix the coating material electrode 2; 62 a set screw to fix the carriage 43 to the rod 17; and 63 a power supply.

The controller 42 shown in Fig. 4 controls the respective power supplies such that the travelling heads 13, 14 and 15 operate with the phase difference of 120° apart from each other.

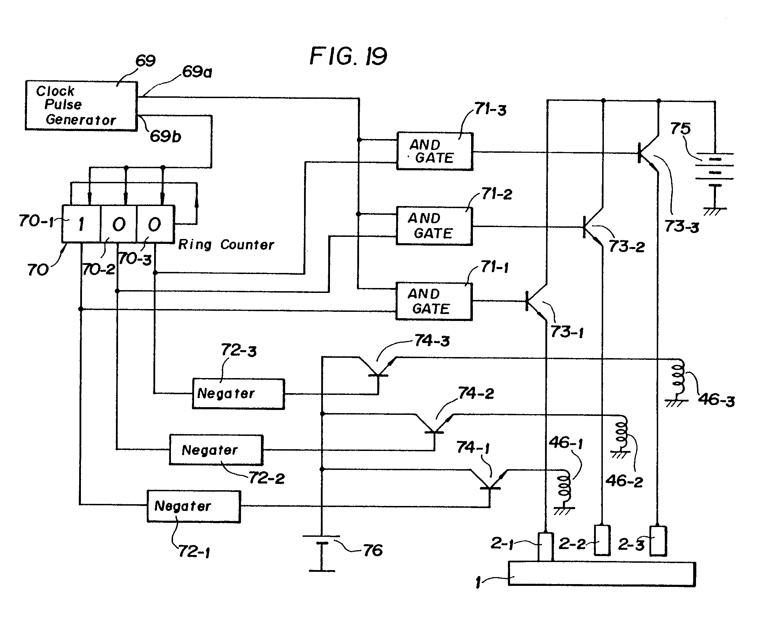

The power supply 63 shown in Fig. 5 actually supplies the currents to the travelling heads 14 and 15 as well as the travelling head 13; its detail will be described later with respect to Fig. 19.

A pulse current having a certain pulse repetition frequency, for example of about 300 Hz, is generally supplied to the coil 46, thereby periodically attracting the attracted member 48 that was attached to the leaf spring 47, so that the leaf spring 47 is vibrated.

An electric power for discharge coating is supplied between the coating material electrode 2 and the workpiece 1 through the current supplying rod 54, current collecting disk 53, coil spring 59, a rotary shaft 58, and chuck 60.

If the case where a rod material having a square cross section whose one side is about 5 mm, or a circular rod material having a diameter of about 5—6 mm is used as the coating material electrode 2, it is preferable that the rotating speed of the output shaft 52 of the motor 51 is set into about 1000 rpm, and the voltage pulse to be fed between the coating material electrode 2 and the workpiece 1 is set such that the peak value becomes about 50 V in the no-load state, i.e. in the state wherein both are apart and no discharge occurs, and that the current about 70 A at the peak value flows when both come into contact.

It is desirable that the pulse width $T_{on}$ of this voltage pulse is set into about 60—2000 μSec and the pulse separation $T_{off}$ is set into about 20—60 μSec.

When attaching the circular or square rod-like coating material electrode 2 to the chuck 60, as shown in Fig. 6, it is preferable to attach in such a manner that its central axis $z_2$ deviates from the central axis $z_1$ of the rotary shaft 58 by approximately the maximum radius of the coating material electrode 2.

The reason of this is that the enough sliding velocity cannot be obtained if the electrode 2 is attached on the central axis $z_1$ of the rotary shaft 58.

However, if one tries to rotate the coating material electrode 2 at high speed in the state shown in Fig. 6, various problems will be caused.

That is to say, the edge of the coating material electrode 2 may cut and scrape the coating layer, and the rotary shaft 58 and other rotational portions and the bearings may be unbalanced due to the torque of the frictional and centrifugal forces, this results in the occurrence of distortion and the like in each portion due to the vibration and concentration of stress.

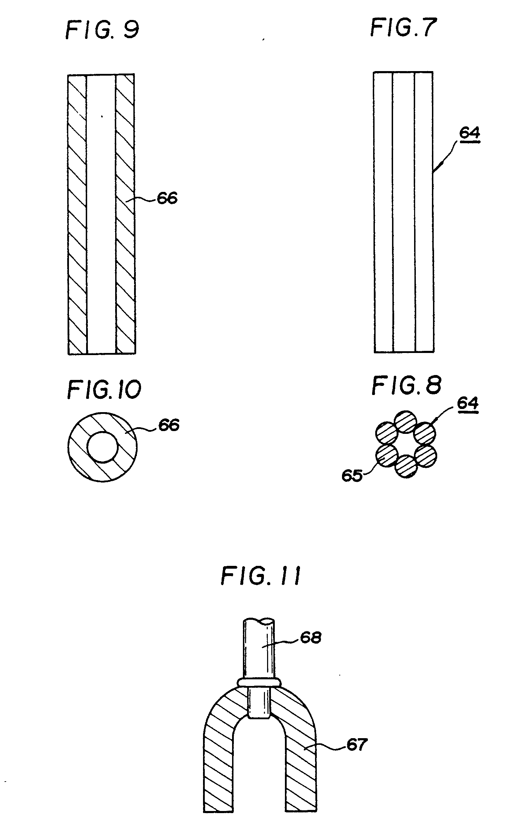

These problems can be overcome by adopting the coating material electrodes having such shapes as shown in Figs. 7 to 11, and rotating them around their axis of their center holes.

A coating material electrode 64 shown in Figs. 7 and 8 is a long hollow body consisting of six thin in Figs. 9 and 10 is a thick tubular coating material electrode 66.

Fig. 11 shows a coating material electrode wherein a shaft member 68 is attached to a bowl-shaped or oriental bell-shaped coating material 67.

Since these coating material electrodes can be adopted using their geometrical and dynamical symmetry axes as rotational central axes, even if they are rotated at high speed while pressing onto the workpiece 1, no vibration will occur and a coating layer will not be scratched during the rotation.

For these coating material electrodes, since no coating material exists in the rotational central portion, sufficient sliding velocity can be provided even in any portions of the contact surface with the workpiece 1.

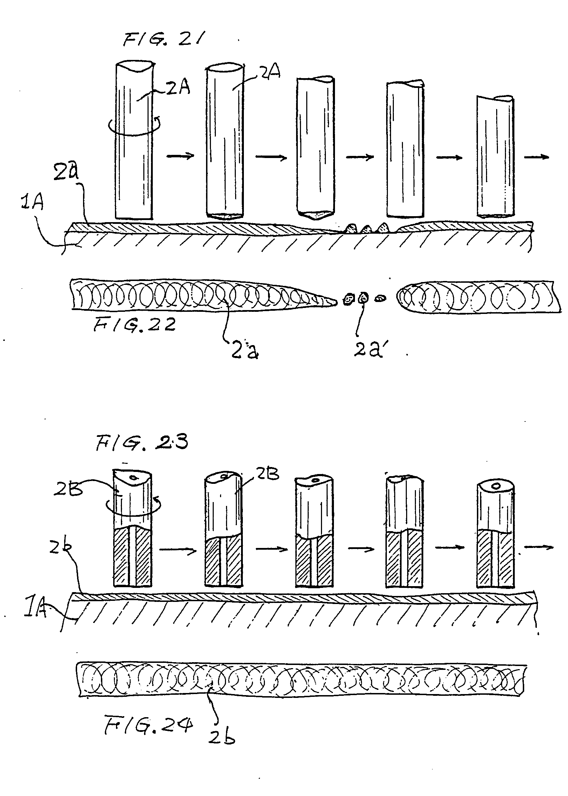

The effect of this central hole is shown in Figs. 21 to 24.

In Fig. 21, a solid columnar electrode 2A moves from the left to right in the drawing while rotating around its central axis, thereby forming a discharge coating layer 2a on a base metal 1A.

In this case, in the portion except the rotational central portion of the electrode 2A, the electrode material is smoothly fused and is adhered on the surface of the base metal 1A, so that the electrode 2A will be gradually consumed. However, on the central axis, since the insulating covering is caused on the electrode surface, the fusion due to discharge is not caused, so that the point of the electrode will become conical. When this conical point grows, the formation of the coating layer is obstructed and the adhering width gradually become thin as shown in Fig. 22, and finally the adhesion will be interrupted. In such a case, the insulating layer at the point portion of the coating material electrode 2A is destroyed due to the frictional force and the discharge occurs. Thus, the point portion becomes a spot or lump 2a' and is melt-adhered on the surface of the base metal 1A and the electrode point again becomes flat. However, since the similar cycles are repeated, such interruption of the coating belt and the defective-shaped melt-adhered portions that were separated like islands appear periodically, so that the defective portions of the coating layer are formed.

Thereafter, these defective portions are ground down by the electrode or are covered by the coating layers to be formed in the upper layers, but they will not be completely mended and remain on the coating surface, so that its uniformity will be lost.

These problems can be solved by forming a small hole in the rotational center of the electrode. An adequate effect will be obtained even if the diameter of this hole is relatively small, e.g. about 1 mm or less. Therefore, its diameter value may be properly determined from the viewpoint of the hole forming technology and the viewpoint of effective usage of electrode materials. Typically, a hole diameter in the range of about 1 to 5 mm is recommended.

When an electrode 2B having a hole in the rotational center in this way is used, as shown in Fig. 23, the point surface of the electrode is uniformly consumed, so that the uniform coating layer 2b without the defective portions as described above is formed.

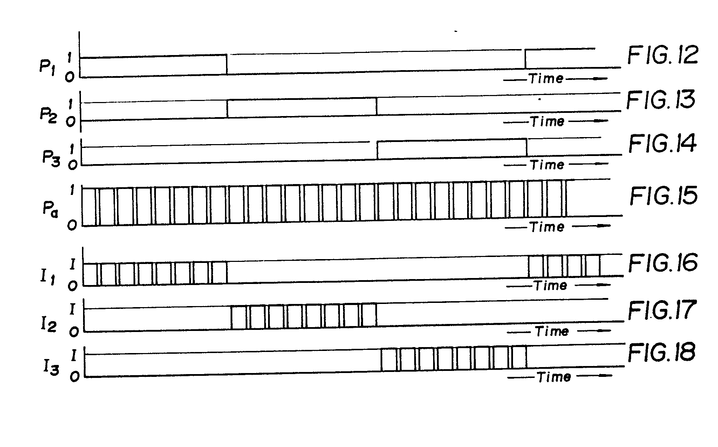

The electrical operation of the apparatus will now be described with reference to Figs. 12 to 19.

In Fig. 19, reference numerals 2-1, 2-2 and 2-3 indicate coating material electrodes attached to the travelling heads 13, 14 and 15, respectively; 46-1, 46-2 and 46-3 are electromagnet coils for the travelling heads 13, 14 and 15; 69 a clock pulse generator; 70 a ring counter; 71-1, 71-2 and 71-3 AND-gates; 72-1, 72-2 and 72-3 negaters; 73-1, 73-2 and 73-3 switching elements for discharge coating current pulses; 74-1, 74-2 and 74-3 switching elements for current pulses for exciting of the electromagnet coils 46-1, 46-2 and 46-3; 75 a DC power supply for discharge coating; and 76 a DC power supply for exciting the electromagnets.

The clock pulse generator 69 has two output terminals 69a and 69b. A clock pulse train having a certain pulse repetition frequency, for example, of 2380.95 Hz is output from the output terminal 69a, and the clock pulse train having the pulse repetition frequency of 297.62 Hz, 1/8 of the former frequency, is output from the output terminal 69b.

The former pulse is a pulse train $P_a$ shown in Fig. 15. This pulse train $P_a$ has a pulse width of 400 µSec and pulse separation of 20 µSec, and its pulse duty factor is extremely high. On the contrary, the latter low frequency clock pulse can be ordinary clock pulse.

The ring counter 70 consists of three bits 70-1, 70-2 and 70-3; only one bit among them is always state 1 and the other two bits are state 0. In the state shown in the drawing, the bit 70-1 is state 1 and the other two bits 70-2 and 70-3 are state 0. However, the position of the bit which is state 1 is shifted and circulated when a shift command pulse is applied.

The low frequency pulse output from the terminal 69b is sent to the ring counter 70 as a shift pulse for allowing the bit position of state 1 to be circulated.

The output pulses from the output terminals provided for each bit to indicate the state of each of the bits 70-1, 70-2 and 70-3 of the ring counter 70 are pulses $P_1$, $P_2$ and $P_3$ shown in Figs. 12, 13 and 14, respectively. Each of these pulse trains has the duty factor of 1/3 and the phase difference between them is 120°.

These output pulses are sent through the AND gates 71-1, 71-2 and 71-3 to each base of the switching elements 73-1, 73-2 and 73-3, on the other hand, they are sent to the negaters 72-1, 72-2 and 72-3, where they are inverted, and thereafter they are sent to each base of the switching elements 74-1, 74-2 and 74-3.

In the state shown in Fig. 19, since the bit 70-1 is state 1, the switching element 74-1 is off and the switching elements 74-2 and 74-3 are on. Thus, the electromagnet 44 of the travelling head 13 is not excited and the attracted member 48 is not attracted to the iron core 45, so that the point of the coating material electrode 2-1 is in the state in which it can come close to or into contact with the surface of the workpiece 1. However, the electromagnets of the other travelling heads 14 and 15 are excited and, accordingly, attract the respective corresponding attracted members, so that the coating material electrodes 2-2 and 2-3 are removed from the workpiece 1, or being removed therefrom.

On the other hand, the high frequency clock pulse $P_a$ generated from the clock pulse generator 69 passes through the AND gate 71-1 and can reach the base of the switching element 73-1. Hence, the switching element 73-1 is switched in synchronism with the clock pulse $P_a$, so that the current pulses as shown in Fig. 16 is supplied across the workpiece 1 and coating material electrode 2-1.

When one clock pulse is supplied from the output terminal 69b of the clock pulse generator 69, the bit 70-2 becomes state 1 and the bit 70-1 becomes state 0, so that the switching element 74-1 becomes on and the switching element 74-2 becomes off. As a consequence, the coating material electrode 2-1 is removed from the workpiece 1 and the electrode 2-2 comes close to or into contact with the workpiece 1. At the same time, on one hand, the negater 72-2 is opened by the clock pulse $P_a$ and the switching element 73-2 serves to supply the electric power or discharge coating to the coating material electrode 2-2. This current pulse is shown as $I_2$ in Fig. 17.

The next clock pulse cause the coating material electrode 2-2 to be removed from the workpiece 1, and in place of this, it allows the electrode 2-3 to come into contact with the workpiece 1. At the same time, the current pulse $I_3$ shown in Fig. 18 is supplied to both through the AND gate 71-3 and switching element 73-3.

However, since the AND gates 71-1 and 71-3 are closed, the switching elements 73-1 and 73-3 are off, so that no current pulse is distributed to the coating material electrodes 2-1 and 2-3.

During the above-described cycles, each of the coating material electrodes 2-1, 2-2 and 2-3 is rotated around the respective axis at the speed of 1000 rpm, thereby forming a coating layer with excellent quality on the surface of the workpiece 1.

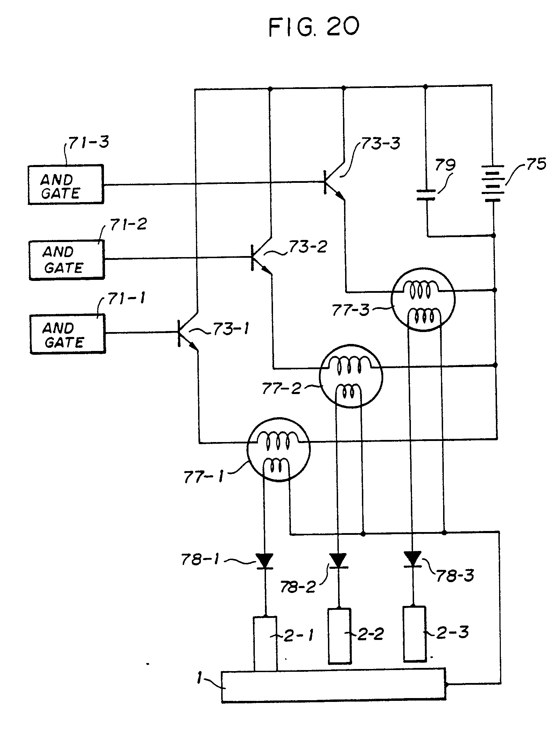

In this circuit, the section to supply the electric power for coating to the coating material electrode and workpiece can be modified as shown in Fig. 20.

In the drawing, numerals 77-1, 77-2 and 77-3 represent inductive couplings, i.e. pulse transformers; 78-1, 78-2 and 78-3 are diodes; and 79 is a capacitor to smooth a current.

With this circuit, it is possible to simplify protection circuit (not shown) of the switching elements 73-1, 73-2 and 73-3; therefore, there is an advantage such that the whole apparatus can be miniaturized.

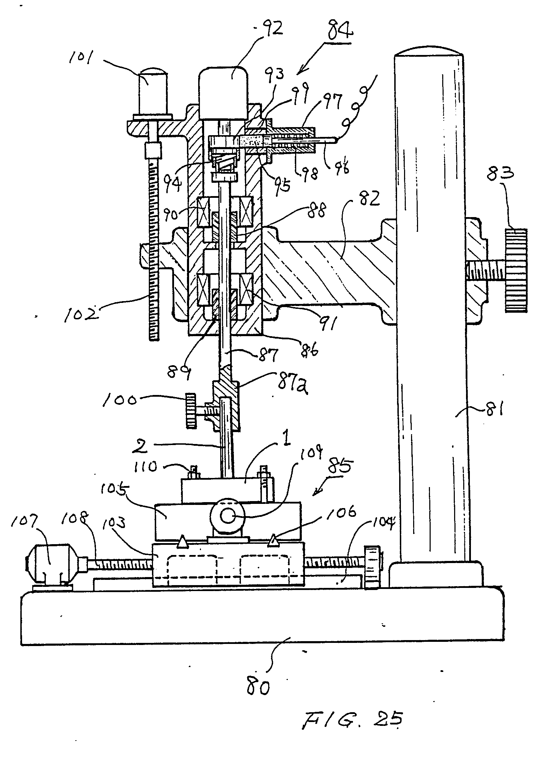

Next, Fig. 25 will be described.

In the drawing, a reference numeral 80 denotes a bed; 81 a column standing on the bed 80; 82 an arm supported by the column 81; 83 a screw for fixing the arm; 84 a head elevationally supported by the arm 82; 85 a cross table which is mounted on the bed 80 and to which the workpiece 1 is attached. The head 84 comprises: a housing 86; a vibrating stem 87 which has at its lower end an electrode chuck portion 87a and is supported by the housing 86 to freely rotate and vibrate in its axial direction; iron cores 88 and 89 respectively fixedly attached to two portions in the intermediate portion of the vibrating stem 87; vibration generating coils 90 and 91; a motor 92 to rotate the vibrating stem 87; a current receiving disk 93 attached to the output shaft of the motor 92; a volute spring 94 for coupling the current receiving disk 93 and the vibrating stem 87; a current supplying shoe 95 for supplying a current to the current receiving disk 93 by coming into contact with the side surface thereof; a current supplying rod 96; a current supplying section housing 97 made of plastic; a spring 98; an insulating bushing 99; and an electrode attaching screw 100. This head 84 is elevated along the column 81 by a head elevating motor 101 and an elevating screw 102. The cross table 85 is constituted by a travelling table 103 in the X axial direction which was movably mounted on a guide rail 104 provided on the bed 80, a travelling table 105 in the Y axial direction which was movably mounted on a guide rail 106 provided on the travelling table 103 in the X axial direction, a travelling motor 107 in the X axial direction, a travelling screw 108 in the X axial direction, a travelling motor 109 in the Y axial direction, and a travelling screw in the Y axial direction (not shown), etc., A numeral 110 is a clamp for attaching the workpiece 1 to the cross table 85.

In this apparatus, although the vibrating stem 87 is depressed downwardly due to the elastic force of the volute spring 94 and the weight thereof, when a voltage pulse is supplied from a power supply (not shown) to the vibration generating coiling 90 and 91, their electromagnetic force periodically act to attract and pull up the iron cores 88 and 89, so that they are strongly vertically vibrated. Therefore, the point of the electrode 2 attached to the lower end portion of the Vibrating stem 87 is come into contact with and is removed from the upper surface of the workpiece 1.

An electric power for coating is supplied to the electrode 2 through the current supplying rod 96, current supplying shoe 95, current receiving disk 93, volute spring 94, and vibrating stem 87. The workpiece 1 is machine-travelled by means of the cross table 85 to be driven by the motors 107 and 109 in the two directions of X and Y axis perpendicularly to the central axis of the electrode 2, thereby forming a coating layer on a desired surface of the workpiece 1.

The effects of the present invention will be described hereinbelow with respect to the examples in comparison with a prior-art method.

Examples of machining by a prior-art method

Typically, the following machining conditions are considered to be optimum to perform the discharge coating by a prior-art method; i.e. only the vibration in the axial direction and the machining feed at extremely low speed in the direction perpendicular to the above axial direction are applied to the coating material electrode, but the "additional motion" and "sliding velocity V" to be used in this invention are not at all applied to the electrode.

## 0 107 343

| | |
|---|---|
| Power voltage (no load): | 50 V |
| Voltage current pulse: | |
| Pulse width ($T_{on}$): | 80 µsec |
| Pulse separation ($T_{off}$): | 20 µsec |
| Discharge current pulse amplitude: | 70 A |
| Vibration frequency of the electrode: | 300 Hz |
| Scanning velocity of the electrode: | 10 mm/min |

The coating material electrode is mounted perpendicularly to the surface to be coated and is vibrated in its axial direction under the above-mentioned conditions, thereby permitting its point to come into contact with and be moved from that surface.

It is recommended to constitute such that the electrode and workpiece surface together keep the contact relation during the time period of 1/10 to 1/3 of one vibration cycle, and three to ten pulses are supplied during that period thereby to perform the discharge.

For example, in the case where the coating layer is formed on the surface of the member consisting of SKH9 hardened steel in the air using a sintered alloy cylindrical rod having a circular cross section whose diameter is 5 mm, as a coating material, consisting of 10 weight percent of cobalt and remaining tungsten carbide, the coating layer having an average thickness of about 4.8 to 5.2 µm was formed at a speed of 3.6 to 4 mg/min under the above-described conditions.

This coating amount is substantially the maximum limit and it is essentially impossible to perform the laminate coating any more.

It has been found by observing the cross sectional view of this coating layer that the surface of the base metal largely waves since it was struck by the coating material electrode and the coating layer is porous, and that there are mixed various portions such as the portion where the coating layer is localized and becomes thick like a small hill, the portion like the bottom of a ravine where there is little coating material deposited between those small hills, the portion where thin coating material is deposited although its thickness is relatively uniform, and the like. The Vickers hardness was 1200 Hv, but even if the particularly projecting portion is excluded, the roughness of the coated surface was about 95 to 80 µm Rmax. Especially, the projecting portion was weak and could be easily peeled off.

### Example I

The processing was performed while rotating the electrode around its central axis at a speed of 1000 rpm under the same conditions as above. As a result of this, it was possible to form the coating layer having an average thickness of about 20 µm at a speed of 6—7.2 mg/min.

In this case, the coating material electrode rotates about 20° during one cycle of the motion of the coating material electrode. Assuming that the time period when the electrode is into contact with the coating surface is 1/3 of one cycle, the motor output shaft rotates 6° 40' (six degrees and forty minutes) during that period. This value means that the coating material electrode rubs the coating surface by about 0.3 mm near the outer edge portion every time the coating material electrode come into contact with the coating surface.

It could be seen that the surface of the base metal did not wave as was observed in the machining by the conventional method, but was smooth and the coated layer was thick and its thickness was substantially uniform over entire surface, and that the texture was dense and the surface roughness of the coated layer was 7—8 µm Rmax in average over a wide range on the surface and the Vickers hardness was 1200 Hv.

However, in this example, the defective portions accompanied with relatively large projecting portions occurred periodically in the scanning direction, by the above-mentioned reason.

### Example II

To solve such problems, as a coating material electrode, a hole having an inside diameter of 0.5 mm was formed in the center of the above electrode, then the comparison test was performed under the same conditions as above.

As a result, it was possible to form the coated layer having an average thickness of about 8 to 10 µm without any defects as mentioned above at a speed of 7 to 8 mg/min.

The surface roughness reached maximum 3 µm Rmax and 5 µm Rmax in average.

### Example III

In case of performing the method of the present invention, it was considered that large diameter of the electrode is more preferable. According to the present invention, it was considered that it is possible to use a pulse having a large pulse width than that by the conventional method.

To verify these assumption, a pipe-shaped electrode having an outside diameter of 15 mm and an inside diameter of 2 mm was made of the same material as the above examples, and the comparison tests were carried out.

The material of the workpiece, vibration frequency, rotational speed and scanning speed of the electrode are identical to those in the former examples.

9

| Test No. | i | ii | iii |
|---|---|---|---|
| Voltage pulse width: | 500 µSec | 1000 | 2000 |
| Voltage pulse separation: | 20 µSec | 40 | 40 |
| Current amplitude: | 72 A | 72 | 72 |
| Coating speed: | 20 mg/min | · 21—24 | 22 |
| Coating surface roughness: | 8 µm Rmax | 7—8 | 11 |
| Thickness of the coating: | 19 µm | 21 | 20 |

In the conventional method, if such a current pulse is used, the coating material electrode will be immediately red-heated and at the same time, the surface of the base metal will also change to true black, so that the discharge coating cannot be dome any more.

However, according to the present invention, there will be no problem and a coating layer can be efficiently formed.

The coating speed by the conventional method was 4 mg/min and the thickness of the coated layer thus obtained was about 5 µm. Therefore, it will be appreciated that the coating capability of the present invention is approximately four times or more better than that of the conventional method in terms of the velocity and thickness.

In addition, it is also possible to treat a spherical surface as well as a flat surface under the same conditions as above. For example, it is possible to form the coated layer with substantially the same quality as was derived on the above flat surface on the spherical surface having a radius of, e.g. about 80 mm.

Example IV
Test condition:

| Electrode: | |
|---|---|
| Material: | 10% Co-WC |
| External diameter: | 3 mm |
| Scanning speed: | 10 mm/min |
| Rotating speed: | 960 rpm |
| Center hole diameter: | 0.5 mm |
| Vibrating frequency: | 300 Hz |
| Voltage pulse: | |
| Width: | 200 µSec |
| Separation: | 40 µSec |
| Current amplitude: | 32 A |

Results:

| | Electrode | |
|---|---|---|
| | Having center hole | Solid |
| Coating speed: | 3.8 mg/min | 2.8 |
| Thickness of layer: | 2.8 µm/min | 1.7 |
| Roughness of surface: | 9 µm Rmax | 9 |

Comparative data (no vibration, rotation only):

| | Electrode | |
|---|---|---|
| | Having center hole | Solid |
| Coating speed: | 3.2 mg/min | 2.2 |
| Thickness of layer: | 2.2 µm/min | 1.5 |
| Roughness of surface: | 9 µm Rmax | 9 |

Example V
Test condition:

Electrode:
    Material:                  10% Co-WC
    External diameter:         8 mm
    Scanning speed:            10 mm/min
    Rotating speed:            960 rpm
    Center hole diameter:      1 mm
    Vibrating frequency:       300 Hz
Voltage pulse:
    Width:                     1000 µSec
    Separation:                45 µSec
Current amplitude:             45 A

Results:

| | Electrode | |
| | Having center hole | Solid |
| --- | --- | --- |
| Coating speed: | 13 mg/min | 10.8 |
| Thickness of layer: | 8.7 µm/min | 7.2 |
| Roughness of surface: | 11 µm Rmax | 11 |

Comparative data (no vibration, rotation only):

| | Electrode | |
| | Having center hole | Solid |
| --- | --- | --- |
| Coating speed: | 9 mg/min | 5 |
| Thickness of layer: | 6 µm/min | 3.3 |
| Roughness of surface: | 11 µm Rmax | 12 |

Example VI
Test condition:

Electrode:
    Material:                  10% Co-WC
    External diameter:         20 mm
    Scanning speed:            10 mm/min
    Rotating speed:            960 rpm
    Center hole diameter:      1 mm
    Vibrating frequency:       300 Hz
Voltage pulse:
    Width:                     2000 µSec
    Separation:                45 µSec
Current amplitude:             45 A

Results:

| | Electrode | |
| | Having center hole | Solid |
| --- | --- | --- |
| Coating speed: | 15.4 mg/min | |
| Thickness of layer: | 10.3 µm/min | |
| Roughness of surface: | 12 µm Rmax | |

Comparative data (no vibration, rotation only):

| | Electrode | |
| | Having center hole | Solid |
| --- | --- | --- |
| Coating speed: | 7.1 mg/min | |
| Thickness of layer: | 4.7 µm/min | |
| Roughness of surface: | 13 µm Rmax | |

11

Example VII
Test condition:

Electrode:
  Material:                        1%B-5%Ni-5%Fe-WC
  External diameter:       3 mm
  Scanning speed:         10 mm/min
  Rotating speed:          960 rpm
  Center hole diameter:    0.5 mm
  Vibrating frequency:     300 Hz
Voltage pulse:
  Width:                          200 μsec
  Separation:              40 μsec
  Current amplitude:       32 A

Results:

|  | Electrode | |
|---|---|---|
|  | Having center hole | Solid |
| Coating speed: | 3.8 mg/min | 2.1 |
| Thickness of layer: | 2.5 μm/min | 1.4 |
| Roughness of surface: | 9 μm Rmax | 9 |

Comparative data (no vibration, rotation only):

|  | Electrode | |
|---|---|---|
|  | Having center hole | Solid |
| Coating speed: | 3.2 mg/min | 2.0 |
| Thickness of layer: | 2.1 μm/min | 1.3 |
| Roughness of surface: | 9 μm Rmax | 9 |

Example VIII
Test condition:

Electrode:
  Material:                        1%B-5%Ni-5%Fe-WC
  External diameter:       8 mm
  Scanning speed:         10 mm/min
  Rotating speed:          960 rpm
  Center hole diameter:    1 mm
  Vibrating frequency:     300 Hz
Voltage pulse:
  Width:                          1000 μSec
  Separation:              40 μSec
  Current amplitude:       45 A

Results:

|  | Electrode | |
|---|---|---|
|  | Having center hole | Solid |
| Coating speed: | 16 mg/min | 9.6 |
| Thickness of layer: | 10.7 μm/min | 6.4 |
| Roughness of surface: | 12 μm Rmax | 12 |

Comparative data (no vibration, rotation only):

|  | Electrode | |
|---|---|---|
|  | Having center hole | Solid |
| Coating speed: | 8 mg/min | 5.7 |
| Thickness of layer: | 5.3 μm/min | 3.8 |
| Roughness of surface: | 13 μm Rmax | 12 |

Example IX
Test condition:

| Electrode: | |
|---|---|
| Material: | 1%B-5%Ni-5%Fe-WC |
| External diameter: | 20 mm |
| Scanning speed: | 10 mm/min |
| Rotating speed: | 960 rpm |
| Center hole diameter: | 1 mm |
| Vibrating frequency: | 300 Hz |
| Voltage pulse: | |
| Width: | 2000 μSec |
| Separation: | 40 μSec |
| Current amplitude: | 45 A |

Results:

| | Electrode | |
|---|---|---|
| | Having center hole | Solid |
| Coating speed: | 15 mg/min | 7 |
| Thickness of layer: | 10 μm/min | 4.7 |
| Roughness of surface: | 12 μm Rmax | |

Comparative data (no vibration, rotation only):

| | Electrode | |
|---|---|---|
| | Having center hole | Solid |
| Coating speed: | 6.3 mg/min | 3 |
| Thickness of layer: | 4.2 μm/min | 2 |
| Roughness of surface: | 12 μm Rmax | |

In the conventionally known method, it is known that a sole discharge realized the melt-adhesion of the coating material which covers the circular region with a diameter of about 10—30 μm. On the contrary, according to the method of the present invention, the region to be coated becomes elliptical since the coating material electrode is moved by about 20—100 μm during the period of time when one discharge is being done, i.e. in the pulse width $T_{on}$. Moreover, since the coating material electrode apart from the workpiece surface while moving along it, the fused metal is rubbed and adhered on the workpiece surface, or is coated thereon; thus, it is prevented that the fused metal protrudes as if a thread were pulled when it aparts from the workpiece surface.

For this purpose, the coating material electrode is rotated at any speed from 500 to 6000 rpm in dependence upon its diameter or the like.

The melt-adhered portions produced due to each current pulse are piled up like a scale, thereby forming a smooth, dense and rigid coated layer.

Although it is preferred to apply the additional motion to be given to the coating material electrode by rotating the electrode, this can be exerted by vibrating the electrode in the direction perpendicular to its axis. On the other hand, when applying the additional motion due to the rotation, this rotation may be a regular single directional rotational motion, or may be a vibrational rotational motion of which its direction is periodically switched forwardly and reversely.

Furthermore, the power supply for discharge coating which is used to perform the present invention is connected to the coating material electrode and workpiece, and it may be a capacitor which is charged by a charging circuit having a fixed time constant, or a rectifier circuit to which the alternating current supplied from a commercially available power supply is supplied, and the like.

In addition, as an apparatus for vibrating an electrode, it is possible to utilize a known vibration generating apparatus such as an eccentric cam, an electrostrictive or magnetostrictive vibrating apparatus, pneumatic type vibrating apparatus, etc., in spite of the said vibration generating apparatus consisting of the above-described electromagnets and leaf spring.

It is obvious that the kind and shape of the coating material can be further properly changed in accordance with the property and shape of the workpiece and the purpose of coating.

Furthermore, although the multiple head and double housing type has been shown as an apparatus in the above embodiments, this may be the single head and open side type, and moreover, it can be of the type similar to a planar, lathe turning machine, boring machine, milling machine, etc. In addition, it can be the handheld type if necessary.

# 0 107 343

**Claims**

1. A method of coating a layer on a member (1) comprising providing a coating material electrode (2) adjacent the surface of the member and producing relative movement between the electrode and the member while passing a current through the electrode and the member, thereby forming a coating layer on the surface of the member, characterised in that the relative movement comprises a vibration of the electrode in the direction of a longitudinal central axis thereof and towards and away from the member, and an additional motion which is a rotational motion around the longitudinal central axis or an axis parallel thereto.

2. A method according to claim 1, wherein the coating material electrode has a rotational speed within a range from 500 to 6000 rpm.

3. A method according to claim 1 or 2, wherein a coating material electrode having no substance on its rotational central axis is used.

4. A method according to claim 3, wherein a tubular coating material electrode is used.

5. A method according to claim 3, wherein a coating material electrode having a concave portion in its central portion is used.

6. A method according to claim 3, wherein a coating material electrode consisting of a plurality of thin wires bound like a hollow tube is used.

7. A method of coating a layer on a member (1) comprising providing a coating material electrode (2) adjacent the surface of the member and producing relative movement between the electrode and the member while passing a current through the electrode and the member, thereby forming a coating layer on the surface of the member, characterised in that the relative movement comprises a vibration of the electrode in the direction of a longitudinal central axis thereof and towards and away from the member, and an additional motion which is a vibration which is perpendicular to said axis.

8. A method according to any one of claims 1 to 7, wherein said coating material electrode slides on the surface of said member due to said additional motion during one period of time when the coating material electrode is in contact with the surface of said member for a distance of at least 10 µm, preferably 20—100 µm.

9. A method according to any one of claims 1 to 8, wherein said coating material electrode is pressed onto the surface of said member through elastic supporting means, thereby to produce a skipping motion.

10. A discharge coating apparatus for coating a layer on a member (1) comprising a coating material electrode (2) arranged to be positioned adjacent the surface of the member, means for producing relative movement between the electrode and the member, and means for simultaneously passing a current through the electrode and the member, characterised in that the movement producing means comprises means for producing vibration of the electrode in the direction of a longitudinal central axis thereof and means for producing additional motion having at least a major component lying in a plane perpendicular to said axis.

11. A discharge coating apparatus according to claim 10 wherein the movement producing means comprises: a base (5) a table (34) which is movably mounted on said base and can mount and move a member (1) to be treated; travelling means (35) for moving said table, columns (7—10) on said base; a cross beam (11) slidably supported by said columns; travelling means (12) for moving said cross beam along said columns; one or more machining heads (13—15) consisting of: a carriage (43) movably supported by said cross beam in the direction perpendicular to the moving direction of said table and cross beam; electrode attaching means (60) attached to said carriage; electrode vibrating means (45—50) for applying the vibration in the axial direction to said electrode attaching means; means (51, 52, 59) for applying an additional motion in the direction perpendicular to said vibrational direction to the electrode without obstructing the motion of said electrode attaching means; and current supplying means (63) for supplying a desired electric power to said motor and said electrode vibrating means without obstructing the motion of said electrode attaching means; and a controller (42) for controlling the motions of said table travelling means, cross beam travelling of said table travelling means, cross beam travelling means and machining heads and wherein the current supplying means (63) also constitutes said current passing means and is arranged to supply a current pulse required for discharge coating to the electrode attached.

12. A discharge coating apparatus according to claim 11, wherein said electrode vibrating means consists of an electromagnet (45, 46) and a leaf spring (47) which rotatably holds said electrode attaching means and is adapted to be attracted and vibrated by said electromagnet.

13. A discharge coating apparatus according to claim 11 or 12, wherein said means for applying the additional motion is a motor (51) to rotate said electrode attaching means.

14. A discharge coating apparatus according to claim 13 wherein an elastic member (59) is provided between the output shaft (52) of the motor and the electrode attaching means (60).

15. A discharge coating apparatus according to claim 10 wherein the movement producing means comprises: a bed (80), a cross table (85) which is movably mounted on said bed and can mount and move a member (1) to be treated; travelling means (108) for moving said cross table; a column (81) on said bed; an arm (82) supported by said column; a head (84) consisting of: a housing (86) movably supported by said arm in the direction perpendicular to the moving surface of said cross table; a motor (92) attached to said housing; a vibrating stem (87) which is attached through an elastic member (94) to the output shaft of said

14

motor and is provided with electrode attaching means (87a); vibrating means (88—91) for applying a vibration to said vibrating stem in its axial direction without obstructing the rotation of the vibrating stem; and current supplying means for applying a desired electric power to said motor and said vibrating means without obstructing the motion of said vibrating stem; and a controller for controller the operations of said cross table travelling means and said head, and wherein the current supply means also constitutes said current passing means and is arranged to supply a current pulse required for discharge coating to an electrode (2).

16. A discharge coating apparatus according to any one of claims 11 to 15, wherein said means for supplying the current pulse required for discharge coating to the electrode consists of a DC power supply (75) connected to the electrode and the member to be treated through a switching element (73), and means (71) for switch-controlling said switching element.

17. A discharge coating apparatus according to any one of claims 11 to 15, wherein said means for supplying the current pulse required for discharge coating to the electrode attached consists of: a DC power supply (75); inductive coupling means (77) whose primary side is connected through a switching element (73) to said DC power supply and whose secondary side is connected to the electrode and the member to be treated; and means (17) for switch-controlling said switching element.

18. A discharge coating apparatus according to any of claims 11 to 17, wherein said elastic member provided between the output shaft of said motor and said electrode attaching means is a helical torsion coil spring which is provided for allowing said coating material electrode to perform a skipping motion when the coating material electrode comes into contact with the surface to be treated and for preventing the vibration of the electrode from being transferred to the motor (51) and to other parts.

19. A discharge coating apparatus according to any of claims 11 to 17, wherein said elastic member provided between the output shaft of said motor and said electrode attaching means is a volute spring which is provided for allowing said coating material electrode to perform a skipping motion when the coating material electrode comes into contact with the surface to be treated and for preventing the vibration of the electrode from being transferred to the motor (51) and to other parts.

20. A discharge coating apparatus according to any of claims 15 to 19, wherein said vibrating means consists of said elastic member (94), at least one vibration generating coil (90, 91), and at least one iron core (88, 89) which is fixedly attached to said vibrating stem and is adapted to be attracted to said vibration generating coil.

## Patentansprüche

1. Verfahren zum Aufbringen einer Schicht auf ein Element (1), nach welchem eine Beschichtungsmaterial-Elektrode (2) angrenzend an die Oberfläche des Elements angeordnet und unter Hindurchleiten von elektrischem Strom durch die Elektrode und das Element eine relative Bewegung zwischen der Elektrode und dem Element erzeugt wird, wobei auf der Oberfläche des Elements eine Überzugsschicht gebildet wird, dadurch gekennzeichnet, daß die relative Bewegung eine Schwingung der Elektrode in Richtung deren Längsmittelachse und hin auf das Element und weg von dem Element sowie eine zusätzliche Bewegung einschließt, nämlich eine rotierende Bewegung um die Längsmittelachse oder eine zu dieser parallelen Achse.

2. Verfahren nach Anspruch 1, dadurch gekennzeichnet, daß die Beschichtungsmaterial-Elektrode eine Drehgeschwindigkeit in einem Bereich von 500 bis 6000 U/min aufweist.

3. Verfahren nach Anspruch 1 oder 2, dadurch gekennzeichnet, daß eine Beschichtungsmaterial-Elektrode verwendet wird, die an ihrer zentralen Drehachse keine Substanz aufweist.

4. Verfahren nach Anspruch 3, dadurch gekennzeichnet, daß eine rohrförmige Beschichtungsmaterial-Elektrode verwendet wird.

5. Verfahren nach Anspruch 3, dadurch gekennzeichnet, daß eine Beschichtungsmaterial-Elektrode verwendet wird, die in ihrem mittleren Bereich einen konkav ausgebildeten Abschnitt aufweist.

6. Verfahren nach Anspruch 3, dadurch gekennzeichnet, daß eine Beschichtungsmaterial-Elektrode verwendet wird, die aus einer Vielzahl von dünnen Drähten besteht, die wie ein Hohlrohr gebunden sind.

7. Verfahren zum Aufbringen einer Schicht auf ein Element (1), nach welchem eine Beschichtungsmaterial-Elektrode (2) angrenzend an die Oberfläche des Elements angeordnet und unter Hindurchleiten von elektrischem Strom durch die Elektrode und das Element eine relative Bewegung zwischen der Elektrode und dem Element erzeugt wird, wobei auf der Oberfläche des Elements eine Überzugsschicht gebildet wird, dadurch gekennzeichnet, daß die relative Bewegung eine Schwingung der Elektrode in Richtung deren Längsmittelachse und hin zu dem Element und weg von dem Element sowie eine zusätzliche Bewegung einschließt, nämlich eine Schwingung senkrecht zu dieser Achse.

8. Verfahren nach einem der Ansprüche 1 bis 7, dadurch gekennzeichnet, daß die Beschichtungsmaterial-Elektrode aufgrund dieser zusätzlichen Bewegung an der Oberfläche des Elements über eine Distanz von wenigstens 10 µm, vorzugsweise 20 bis 100 µm, gleitet, und zwar während der Zeitspanne, in der sich die Beschichtungselektrode mit der Oberfläche des Elements in Kontakt befindet.

9. Verfahren nach einem der Ansprüche 1 bis 8, dadurch gekennzeichnet, daß die Beschichtungsmaterial-Elektrode durch eine elastische Halteeinrichtung an bzw. auf die Oberfläche des Elements gedrückt wird, derart, daß eine hüpfende Bewegung entsteht.

10. Entladungsbeschichtungsvorrichtung zum Aufbringen einer Schicht auf ein Element (1), mit einer Beschichtungsmaterial-Elektrode (2), die angrenzend an die Oberfläche des Elements anzuordnen ist, mit einer Einrichtung zur Erzeugung einer Relativbewegung zwischen der Elektrode und dem Element und mit einer Einrichtung zum gleichzeitigen Hindurchleiten von elektrischem Strom durch die Elektrode und das Element, dadurch gekennzeichnet, daß die Einrichtung zur Erzeugung der Bewegung eine Einrichtung zur Erzeugung einer Schwingungsbewegung der Elektrode in Richtung deren Längsmittelachse und eine Einrichtung zur Erzeugung einer zusätzlichen Bewegung aufweist, wovon wenigstens ein Hauptbestandteil in einer zu dieser Achse senkrechten Ebene liegt.

11. Entladungsbeschichtungsvorrichtung nach Anspruch 10, dadurch gekennzeichnet, daß die Einrichtung zur Erzeugung der Bewegung aufweist: eine Basis (5), einen Tisch (34), der auf der Basis bewegbar montiert ist und ein zu behandelndes Element (1) aufnehmen und bewegen kann; eine Einrichtung (35) zur Bewegung des Tisches, Ständer bzw. Säulen (7—10) auf der Basis; einen durch die Säulen verschiebbar gehaltenen Querbalken (11); eine Einrichtung (12) zur Bewegung des Querbalkens entlang der Säulen; einen oder mehrere Bearbeitungsköpfe (13—15), die aus einem Schlitten (43) bestehen, der durch den Querbalken in der zur Bewegungsrichtung des Tisches und Querbalkens senkrechten Richtung beweglich gelagert ist; eine an dem Schlitten montierte Elektroden-Befestigungseinrichtung (60); eine Elektroden-Schwingungseinrichtung (45—50) zur Ausübung der Schwingung in axialer Richtung auf die Elektroden-Befestigungseinrichtung; Einrichtungen (51, 52, 59) zur Ausübung einer zusätzlichen Bewegung in der zur Schwingungsrichtung senkrechten Richtung auf die Elektrode, und zwar ohne Behinderung der Bewegung der Elektroden-Befestigungseinrichtung; eine Stromversorgungseinrichtung (63) zur Versorgung des Motors und der Elektroden-Schwingungseinrichtung mit der gewünschten elektrischen Energie, und zwar ohne Behinderung der Bewegung der Elektroden-Befestigungseinrichtung; und einen Regler (42) zur Regelung bzw. Steuerung der Bewegungen der Tisch-Bewegungseinrichtung, der Bewegung des Querbalkens der Tisch-Bewegungseinrichtung, der Einrichtung zur Bewegung des Querbalkens und der Bearbeitungsköpfe, wobei die Stromversorgungseinrichtung (63) auch die Stromdurchführungseinrichtung bildet und so ausgelegt ist, daß sie den für die Entladungsbeschichtung benötigten Stromimpuls an die befestigte Elektrode liefert.

12. Entladungsbeschichtungsvorrichtung nach Anspruch 11, dadurch gekennzeichnet, daß die Elektroden-Schwingungseinrichtung aus einem Elektromagnet (45, 46) und einer Blattfeder (47) besteht, die die Elektroden-Befestigungseinrichtung drehbar hält und derart ausgelegt ist, daß sie durch den Elektromagnet angezogen und in Schwingung versetzt wird.

13. Entladungsbeschichtungsvorrichtung nach Anspruch 11 oder 12, dadurch gekennzeichnet, daß die Einrichtung zur Ausübung bzw. Aufbringung der zusätzlichen Bewegung ein Motor (51) zur Drehung der Elektroden-Befestigungseinrichtung ist.

14. Entladungsbeschichtungsvorrichtung nach Anspruch 13, dadurch gekennzeichnet, daß ein elastisches Element (59) zwischen der Ausgangswelle (52) des Motors und der Elektroden-Befestigungseinrichtung (60) angeordnet ist.

15. Entladungsbeschichtungsvorrichtung nach Anspruch 10, dadurch gekennzeichnet, daß die Einrichtung zur Erzeugung der Bewegung aufweist: ein Bett (80), einen Quertisch (85), der auf dem Bett bewegbar montiert ist und ein zu behandelndes Element (1) aufnehmen und bewegen kann; eine Einrichtung (108) zur Bewegung des Quertisches; einen Ständer (81) auf dem Bett; einen durch Ständer gehaltenen Arm (82); einen Kopf (84), der aus einem Gehäuse (86) besteht, das durch den Arm in der zur Bewegungsfläche des Quertisches senkrechten Richtung bewegbar gelagert ist; einen an dem Gehäuse befestigten Motor (92); einen Schwingschaft (87), der über ein elastisches Element (94) an der Ausgangswelle des Motors befestigt und mit Elektroden-Befestigungselementen (87a) versehen ist; Schwingungseinrichtungen (88—91) zur Ausübung einer Schwingung auf den Schwingschaft in dessen axialer Richtung, und zwar ohne Behinderung der Drehung des Schwingschafts; und eine Stromversorgungseinrichtung zur Versorgung des Motors und der Schwingungseinrichtung mit der gewünschten elektrischen Energie, und zwar ohne Behinderung der Bewegung des Schwingschafts; und einen Regler zur Regelung bzw. Steuerung des Betriebs der Bewegungseinrichtung für den Quertisch und des Kopfes, wobei die Stromversorgungseinrichtung auch die Stromdurchführungseinrichtung bildet und derart ausgelegt ist, daß sie den für die Entladungsbeschichtung benötigten Stromimpuls an eine Elektrode (2) liefert.

16. Entladungsbeschichtungsvorrichtung nach einem der Ansprüche 11 bis 15, dadurch gekennzeichnet, daß die Einrichtung zur Lieferung des für die Entladungsbeschichtung benötigten Stromimpulses an die Elektrode aus einer Gleichstromquelle (75), die über ein Schaltelement (73) an die Elektrode und das zu behandelnde Element angeschlossen ist, und einer Einrichtung (71) für die Schaltsteuerung des Schaltelements besteht.

17. Entladungsbeschichtungsvorrichtung nach einem der Ansprüche 11 bis 15, dadurch gekennzeichnet, daß die Einrichtung zur Lieferung des für die Entladungsbeschichtung benötigten Stromimpulses an die angeschlossene Elektrode aus einer Gleichstromquelle (75) besteht, aus einer induktiven Kopplungseinrichtung (77), deren primäre Seite über ein Schaltelement (73) an die Gleichstromquelle und deren sekundäre Seite an die Elektrode und das zu behandelnde Element angeschlossen ist, und aus einer Einrichtung (17) zur Schaltsteuerung des Schaltelements.

18. Entladungsbeschichtungsvorrichtung nach einem der Ansprüche 11 bis 17, dadurch

16

gekennzeichnet, daß das zwischen der Ausgangswelle des Motors und den Elektroden-befestigungselementen angeordnete elastische Element eine schraubenförmige Torsionsfeder ist, die dafür vorgesehen ist, daß sie der Beschichtungsmaterial-Elektrode die Ausübung einer hüpfenden Bewegung ermöglicht, wenn diese in Kontakt mit der zu behandelnden Oberfläche gelangt, und daß sie eine Übertragung der Schwingungsbewegung der Elektrode auf den Motor (51) und andere Teile verhindert.

19. Entlastungsbeschichtungsvorrichtung nach einem der Ansprüche 11 bis 17, dadurch gekennzeichnet, daß das zwischen der Ausgangswelle des Motors und den Elektrodenbefestigungselementen angeordnete elastische Element eine Bandfeder ist, die dafür vorgesehen ist, daß sie der Beschichtungsmaterial-Elektrode die Ausführung einer hüpfenden Bewegung ermöglicht, wenn diese in Kontakt mit der zu behandelnden Oberfläche gelangt, und daß sie ein Übertragung der Schwingung der Elektrode auf den Motor (51) und andere Teile verhindert.

20. Entladungsbeschichtungsvorrichtung nach einem der Ansprüche 15 bis 19, dadurch gekennzeichnet, daß die Schwingungseinrichtung aus dem genannten elastischen Element (94), zumindest einer Schwingungen erzeugenden Spule (90, 91) und zumindest einem Eisenkern (88, 89) besteht, der an dem Schwingschaft starr befestigt und so ausgelegt ist, daß er an die Schwingungen erzeugende Spule angezogen wird.

**Revendications**

1. Procédé de revêtement d'un organe (1) par une couche, comprenant la disposition d'une électrode (2) d'un matériau de revêtement près de la surface de l'organe et la création d'un déplacement relatif de l'électrode et de l'organe avec circulation d'un courant dans l'électrode et dans l'organe, de manière qu'une couche de revêtement soit formée sur la face de l'organe, caractérisé en ce que le déplacement relatif comprend l'entraînement en vibration de l'électrode en direction de l'axe central longitudinal vers ledit organe et à partir de celui-ci, et un mouvement supplémentaire qui est un mouvement de rotation autour de l'axe longitudinal central ou d'un axe parallèle à ce dernier.

2. Procédé selon la revendication 1, dans lequel l'électrode du matériau de revêtement a une vitesse de rotation comprise entre 500 et 6000 t/min.

3. Procédé selon l'une des revendications 1 et 2, dans lequel une électrode de matériau de revêtement n'ayant pas de substance sur son axe central de rotation est utilisée.

4. Procédé selon la revendication 3, dans lequel une électrode tubulaire d'un matériau de revêtement est utilisèe.

5. Procédé selon la revendication 3, dans lequel une électrode d'un matériau de revêtement ayant une partie concave dans sa partie centrale est utilisée.

6. Procédé selon la revendication 3, dans lequel une électrode d'un matériau de revêtement constitué de plusieurs minces fils associés sous forme d'un tube, est utilisée.

7. Procédé de revêtement d'un organe (1) par une couche, comprenant la disposition d'une électrode (2) d'un matériau de revêtement près de la surface de l'organe et le déplacement relatif de l'électrode et de l'organe avec circulation d'un courant dans l'électrode et dans l'organe, avec formation d'une couche de revêtement à la surface de l'organe, caractérisé en ce que le déplacement relatif comporte une vibration de l'électrode dans la direction de son axe central longitudinal, afin qu'elle se rapproche de l'organe et s'en éloigne, et un mouvement supplémentaire qui est une vibration perpendiculaire audit axe.

8. Procédé selon l'une quelconque des revendications 1 à 7, dans lequel l'électrode du matériau de revêtement glisse à la surface dudit organe du fait du déplacement supplémentaire pendant une période dans laquelle l'électrode du matériau de revêtement est au contact de la surface de l'organe sur une distance d'au moins 10 μm et de préférence comprise entre 20 et 100 μm.

9. Procédé selon l'une quelconque des revendications 1 à 8, dans lequel l'électrode du matériau de revêtement est repoussée contre la surface dudit organe par un dispositif élastique de support, si bien qu'un déplacement avec saut est produit.

10. Appareil de revêtement par décharges électriques destiné à revêtir un organe (1) d'une couche, comprenant une électrode (2) d'un matériau de revêtement disposée afin qu'elle puisse être placée près de la surface de l'organe, un dispositif destiné à provoquer un déplacement relatif de l'électrode et de l'organe et un dispositif destiné à faire circuler simultanément un courant dans l'électrode et dans l'organe, caractérisé en ce que le dispositif destiné à provoquer un déplacement comporte un dispositif destiné à provoquer une vibration de l'électrode dans la direction de son axe longitudinal central, et un dispositif destiné à assurer un déplacement supplémentaire ayant au moins une composante principale dans un plan perpendiculaire à l'axe.

11. Appareil de revêtement par décharge électrique selon la revendication 10, dans lequel le dispositif destiné à provoquer le déplacement comporte une base (5), une table (34) montée afin qu'elle soit mobile sur la base et puisse supporter et déplacer un organe (1) à traiter, un dispositif (35) de déplacement de la table, des colonnes (7 à 10) placées sur la table, une poutre transversale (11) supportée par les colonnes afin qu'elle coulisse, un dispositif (12) destiné à déplacer la poutre transversale le long des colonnes, une ou plusieurs têtes d'usinage (13—15) constituées d'un chariot (43) supporté afin qu'il soit mobile par la poutre transversale en direction perpendiculaire aux directions de déplacement de la table et de la poutre transversale, un dispositif (60) de fixation d'électrodes fixé au chariot, un dispositif (45—50) de vibration de l'électrode destiné à appliquer la vibration en direction axiale au dispositif de fixation d'électrodes, un dispositif (51, 52, 59) destiné à appliquer un mouvement supplémentaire en direction perpendiculaire à la direction de vibration de l'électrode sans que le mouvement du dispositif de fixation de l'électrode soit empêché, et un dispositif de transmission de courant (63) destiné à transmettre de l'énergie électrique voulue au moteur et au dispositif de vibration de l'électrode sans que le mouvement du dispositif de fixation de l'électrode soit empêché, et un organe (42) de commande des mouvements du dispositif de déplacement de la table, du dispositif de déplacement de la poutre transversale et des têtes d'usinage, et dans lequel le dispositif (63) de transmission de courant constitue aussi le dispositif destiné à transmettre un courant et est disposé de manière qu'il transmette une impulsion de courant nécessaire au revêtement par décharges électriques à l'électrode fixée.

12. Appareil de revêtement par décharges électriques selon la revendication 11, dans lequel le dispositif de vibration d'électrode est constitué d'un électro-aimant (45, 46) et d'un ressort à lame (47) qui maintient le dispositif de fixation d'électrode afin qu'elle puisse tourner et il est destiné à être fixé à l'électro-aimant et mis en vibration par celui-ci.

13. Appareil de revêtement par décharge électrique selon l'une des revendications 11 et 12, dans lequel le dispositif destiné à appliquer un mouvement supplémentaire est un moteur (51) destiné à faire tourner le dispositif de fixation d'électrode.

14. Appareil de revêtement par décharges électriques selon la revendication 13, dans lequel un organe élastique (59) est placé entre l'arbre de sortie (52) du moteur et le dispositif de fixation d'électrode (60).

15. Appareil de revêtement par décharges électriques selon la revendication 10, dans lequel le dispositif destiné à assurer le déplacement comporte un socle (80), une table transversale (85) montée sur le socle afin qu'elle soit mobile et permettant le montage et le déplacement d'un organe (1) à traiter, un dispositif (108) destiné à déplacer la table transversale, une colonne (81) montée sur le socle, un bras (82) supporté par la colonne, une tête (84) constituée d'un boîtier (86) supporté par le bras de façon mobile en direction perpendiculaire à la surface de déplacement de la table transversale, un moteur (92) fixé au boîtier, une tige (87) d'entraînement en vibration qui est fixée par l'intermédiaire d'un organe élastique (94) à l'arbre de sortie du moteur et qui a un dispositif de fixation d'électrode (87a), un dispositif (88—91) destiné à appliquer une vibration à la tige vibrante dans la direction axiale sans que la rotation de la tige vibrante soit empêchée, et un dispositif destiné à transmettre de l'énergie électrique voulue au moteur et au dispositif de vibration sans que le mouvement de la tige vibrante soit empêché, et un organe des opérations du dispositif de déplacement de la table transversale et de la tête, et le dispositif de transmission de courant constitue aussi le dispositif destiné à transmettre le courant et est destiné à fournir une impulsion de courant nécessaire au revêtement par décharges électriques à une électrode (2).

16. Appareil de revêtement par décharges électriques selon l'une quelconque des revendications 11 à 15, dans lequel le dispositif destiné à transmettre l'impulsion de courant nécessaire au revêtement par décharges électriques à l'électrode comporte une alimentation continue (75) reliée à l'électrode et à l'organe à traiter par l'intermédiaire d'un dispositif de commutation (73), et un dispositif (71) destiné à commander l'élément de commutation.

17. Appareil de revêtement par décharge électrique selon l'une quelconque des revendications 11 à 15, dans lequel le dispositif destiné à transmettre l'impulsion de courant nécessaire au revêtement par décharges électriques à l'électrode fixée comporte une alimentation continue (75), un dispositif inductif de couplage (77) dont le primaire est connecté par un élément de commutation (73) à l'alimentation continue et dont le secondaire est connecté à l'électrode et à l'organe à traiter, et un dispositif (17) destiné à commander l'élément de commutation.

18. Appareil de revêtement par décharges électriques selon l'une quelconque des revendications 11 à 17, dans lequel l'organe élastique disposé entre l'arbre de sortie du moteur et le dispositif de fixation d'électrode est un ressort hélicoïdal de torsion qui est destiné à permettre à l'électrode du matériau de revêtement d'exécuter un mouvement de saut lorsque l'électrode vient au contact de la surface à traiter et de manière que la vibration de l'électrode ne soit pas transférée au moteur (51) et à d'autres parties.

19. Appareil de revêtement par décharges électriques selon l'une quelconque des revendications 11 à 17, dans lequel l'organe élastique disposé entre l'arbre de sortie du moteur et le dispositif de fixation d'électrodes est un ressort spiralé qui est destiné à permettre à l'électrode du matériau de revêtement d'effectuer un mouvement de saut lorsque l'électrode du matériau de revêtement vient au contact de la surface à traiter et de manière que la vibration de l'électrode ne soit pas transférée au moteur (51) et aux autres parties.

20. Appareil de revêtement par décharges électriques selon l'une quelconque des revendications 15 à 19, dans lequel le dispositif de vibration est formé d'un organe élastique (94), d'au moins un enroulement (90, 91) générateur d'une vibration et d'au moins un noyau de fer doux (88, 89) qui est fixé à la tige vibrante et qui est destiné à être attiré vers l'enroulement générateur de vibrations.

# FIG. 1

# FIG. 2

# FIG. 3

FIG. 4

0 107 343

FIG. 5

POWER
SUPPLY

to 14    to 15

FIG. 6

3

FIG. 9

FIG. 7

66

64

FIG.10

FIG.8

66

64

65

FIG. 11

68

67

FIG. 12
FIG. 13
FIG. 14
FIG. 15
FIG. 16
FIG. 17
FIG. 18

FIG. 19

FIG. 20

FIG. 21

2A

2A

2a

1A

FIG. 22

2a

2a'

FIG. 23

2B

2B

2b

1A

FIG. 24

2b

FIG. 25